# FASCICULE DE BREVET EUROPEEN

(11) **EP 2 648 398 B1**
(45) Date de publication et mention de la délivrance du brevet: **11.10.2017**
(21) Numéro de dépôt: 13162054.4
(22) Date de dépôt: 03.04.2013
(51) Int. Cl.: H04M 3/42, H04W 4/22, H04W 76/00, H04M 3/51, H04W 4/16, H04M 1/663, H04M 1/2745, H04M 1/57, H04M 1/60, H04M 1/725

(54) **PROCÉDÉ DE FILTRAGE D'APPELS ENTRANTS DESTINÉ À ÊTRE MIS EN OEUVRE PAR UN DISPOSITIF EMBARQUÉ DANS UN VÉHICULE**
FILTERVERFAHREN EINGEHENDER ANRUFE, DAS ZUR INTEGRATION IN EINE BORDVORRICHTUNG IN EINEM FAHRZEUG BESTIMMT IST
METHOD FOR FILTERING INCOMING CALLS TO BE PERFORMED BY AN IN-VEHICLE DEVICE

(30) Priorité: 04.04.2012 FR 1253066
(43) Date de publication de la demande: 09.10.2013
(73) Titulaire: Sierra Wireless, 92442 Issy-les-Moulineaux Cedex (FR)
(72) Inventeur: Chu, Nhon, 77590 Bois le Roi (FR); Raouf, Djelal/, 92100 Boulogne Billancourt (FR); Dumont, Jérémie, 91440 Bures sur Yvette (FR)
(74) Mandataire: Vidon Brevets & Stratégie

(56) Documents cités:
- WO-A1-2008/151406
- WO-A1-2009/137617
- US-A1- 2005 124 316
- "3rd Generation Partnership Project; Technical Specification Group Services and System Aspects; eCall Data Transfer; In-band modem solution; General description (Release 9)", 3GPP STANDARD; 3GPP TS 26.267, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.3.0, 1 avril 2011 (2011-04-01), pages 1-36, XP050476622,

## Description

La présente invention concerne le domaine des appels d'urgence émis depuis un dispositif embarqué dans un véhicule accidenté vers un central d'appel via un réseau de communication cellulaire. Plus particulièrement, l'invention concerne le filtrage par un dispositif embarqué dans le véhicule des appels entrants émis par un central d'appel d'urgence.

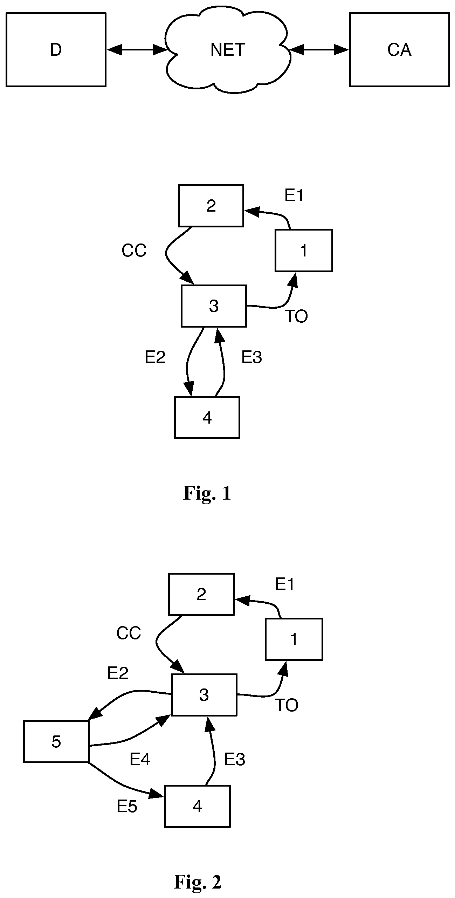

Un système d'appel d'urgence, illustré en partie haute de la Fig. 1, permet à un dispositif D embarqué dans un véhicule accidenté d'émettre un appel d'urgence vers un central d'appel d'urgence CA via un réseau de communication cellulaire NET.

En fonctionnement normal du véhicule, le dispositif D est dans un état 1 dit inactif. Suite à un événement E1, par exemple au déclenchement d'un système d'Air Bag du véhicule, le dispositif D bascule vers un état 2 d'appel d'urgence (*Push mode* en anglais).

Dans cet état, le dispositif D opère une géolocalisation du véhicule. Cette géolocalisation peut se faire pour tout moyen disponible dans le véhicule, par exemple à l'aide d'un système par satellite tel que le GPS (*Global Positioning System* en anglais) ou l'un de ses homologues comme le russe GLONASS ou l'Européen Galileo. De plus, un appel d'urgence est ordonné, soit automatiquement par un calculateur à bord du véhicule, soit à l'initiative d'un usager alors à bord de ce véhicule. Le dispositif D compose alors un numéro d'urgence usuel tel que, par exemple, les numéros 112, 911, etc. et émet cet appel d'urgence ordonné à destination de ce numéro d'urgence. Le central d'appel d'urgence CA reçoit alors cet appel d'urgence.

Suite au décrochage d'un opérateur du central d'appel d'urgence, il est habituel que le dispositif D transmette au central d'appel d'urgence CA des informations relatives, d'une part, aux caractéristiques du véhicule, telles que par exemple un numéro d'identification du véhicule (code VIN) et, d'autre part, à sa géolocalisation. Une fois ces informations reçues par le central d'appel d'urgence CA, l'usager, via le dispositif D, et l'opérateur du central d'appel d'urgence CA dialoguent entre eux. Une fois leur conversation terminée (événement CC généralement appelé *Call Cleardown* en anglais), la communication entre le dispositif D et le central d'appel d'urgence CA est interrompue. Le dispositif D bascule alors dans un état 3 d'attente d'appel entrant (*Standby* en anglais) dans lequel le dispositif D est à l'écoute d'éventuels nouveaux appels entrants dans le dispositif via le réseau NET. Le dispositif D reste, en général, dans cet état une durée de temps maximale prédéterminée, typiquement 10 heures. Au-delà, un événement TO (*TimeOut* en anglais) provoque le basculement du dispositif D dans l'état 1.

Le central d'appel d'urgence CA a alors normalement toutes les informations nécessaires pour organiser les secours et n'a plus besoin de recontacter l'usager.

Toutefois, il est possible que le central d'appel d'urgence ait besoin de rappeler l'usager à bord du véhicule pour lui demander, par exemple, des informations complémentaires. Cette fonction est généralement appelée *Callback* en anglais.

A cet effet, le central d'appel d'urgence CA émet un nouvel appel. Cet appel est considéré comme un nouvel appel entrant par le dispositif D (événement E2). Le dispositif D, alors dans l'état 3, bascule vers un état 4 de communication vocale (*Pull mode* en anglais) dans lequel il est tenté d'établir une communication avec le central d'appel d'urgence CA. A l'issue de la communication ou en cas d'impossibilité d'établissement de la communication (événement E3), le dispositif bascule vers l'état 3.

Comme ce nouvel appel est un simple appel vocal, c'est-à-dire qu'aucune information autre que vocale n'est transmise à ce moment-là entre le central d'appel d'urgence CA et le dispositif D, le dispositif D ne peut pas déterminer l'identité de l'appelant et ne sait pas si l'appel entrant a été émis par le central d'appel d'urgence CA, par un autre central d'appel d'urgence ou par un autre appelant autre qu'un central d'appel d'urgence.

Ainsi, le dispositif D traite de manière systématique et identique tout nouvel appel entrant : mise en attente du nouvel appel ou appel non considéré. En conséquence, si le dispositif reçoit un appel d'un central d'appel d'urgence alors qu'il est en communication avec un autre appelant (autre qu'un central d'appel d'urgence), le dispositif D ne peut pas déterminer si le nouvel appel entrant a été émis par un central d'appel d'urgence et ne peut donc couper (ou mettre en attente l'appel en cours) pour privilégier l'appel entrant émis par le central d'appel d'urgence. En d'autres termes, le dispositif ne peut affecter une priorité aux appels entrants et ne peut mettre en place une gestion d'appel entrant basé sur un mécanisme de priorité. Le document WO 2008/151406 A1 divulgue un système permettant de signaler à un utilisateur qu'un nouvel appel entrant est un rappel du central d'appel d'urgence. Pour ce faire, le système utilise au moins un champ spécifique du protocol SIP (Session Initiation Protocol).

Le problème résolu par la présente invention est de remédier aux inconvénients susmentionnés.

A cet effet, la présente invention concerne un procédé de filtrage d'appels entrants selon la revendication 1, destiné à être mis en oeuvre par un dispositif embarqué dans un véhicule. Ledit dispositif ayant préalablement émis un appel d'urgence à destination d'un central d'appel d'urgence qui gère les appels d'urgence et ledit dispositif étant dans un état d'attente d'éventuels appels entrants émis par des appelants, le procédé est caractérisé en ce qu'il comporte les étapes suivantes :
- identification de l'appelant de chaque nouvel appel entrant,
- si l'appelant identifié est un central d'appel d'urgence, alors une communication entre le dispositif et un opérateur du central d'appel d'urgence est établie et
- le dispositif retourne à l'état d'attente d'éventuels appels entrants à la fin de la communication.

Le procédé permet de trier les appels entrants une fois que le premier appel d'urgence a été émis par le dispositif embarqué dans un véhicule. Ce tri peut déboucher soit sur le rejet des appels entrants qui ne sont pas émis par un central d'appel d'urgence, soit affecter une priorité à chaque appel entrant. Par exemple, une priorité haute peut être affectée à un appel entrant lorsque cet appel est émis par le central d'appel d'urgence et une priorité basse est affectée sinon. On peut aussi prévoir un mécanisme de préemption dans le dispositif qui permet de couper ou mettre en attente un appel en cours dès qu'un nouvel appel entrant est identifié comme ayant été émis par un central d'appel d'urgence.

L'invention concerne également un dispositif de filtrage d'appels entrants selon la revendication 8, un produit programme d'ordinateur selon la revendication 9 et des moyens de stockage lisibles par ordinateur selon la revendication 10. Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 décrit schématiquement un système d'appel d'urgence.
La Fig. 2 représente un diagramme d'états d'un dispositif d'un système d'appel d'urgence qui implémente le procédé de filtrage selon la présente invention.
La Fig. 3 représente un exemple de séquencement temporel des échanges entre un dispositif et un central d'appel d'urgence.
La Fig. 4 représente un exemple d'implémentation d'un mode de réalisation du procédé de filtrage dans le séquencement temporel de la Fig. 3.
La Fig. 5 représente un exemple d'implémentation d'un autre mode de réalisation du procédé de filtrage dans le séquencement temporel de la Fig. 3.
La Fig. 6 représente un exemple d'une architecture interne du dispositif D d'un système d'appel d'urgence.

De manière générale, la présente invention concerne un procédé de filtrage d'appels entrants destiné à être mis en oeuvre par un dispositif D embarqué dans un véhicule. Le dispositif D a préalablement émis un appel d'urgence à destination d'un central d'appel d'urgence CA et le dispositif D est dans l'état 3 tel que décrit dans la partie introductive en relation avec la Fig. 1.

Les éléments des Figs. qui sont identiques portent les mêmes références.

La Fig. 2 représente un diagramme d'état du dispositif D qui implémente le procédé de filtrage selon la présente invention.

Le diagramme d'état de la Fig. 2 comporte un nouvel état 5 de filtrage qui correspond à un état particulier du dispositif D dans lequel ce dispositif identifie l'appelant de chaque appel entrant et détermine si l'appel entrant a été émis par un central d'appel d'urgence ou par un autre appelant.

Ainsi, lorsque le dispositif D est dans l'état 3, c'est-à-dire qu'il est à l'écoute d'un nouvel appel entrant éventuel, et qu'un événement E2 se produit, c'est-à-dire qu'un nouvel appel entrant se présente, le dispositif bascule vers l'état 5 au lieu de basculer dans l'état 4 comme c'est le cas selon la Fig. 1.

Si l'appelant est identifié comme n'étant pas un central d'appel d'urgence, alors le dispositif bascule vers l'état 3 (événement E4).

Si, au contraire, l'appelant est identifié comme étant un central d'appel d'urgence alors le dispositif D bascule dans l'état 4 de communication vocale et il est tenté d'établir une communication entre le dispositif D et le central d'appel d'urgence. A l'issue de la communication ou en cas d'impossibilité d'établissement de la communication (événement E3), le dispositif bascule vers l'état 3.

Comme on s'en rend compte, le procédé de filtrage selon la présente invention peut être mis en oeuvre dans n'importe quel système d'appel d'urgence qui permet à un central d'appel d'urgence de rappeler un dispositif D embarqué dans un véhicule.

A titre d'exemple de mise en oeuvre du procédé de filtrage, les moyens qui mettent en oeuvre ce procédé sont maintenant décrits dans le cadre d'un système d'appel d'urgence normalisé sous la forme d'un projet 3GPP (*3rd Generation Partnership Project* en anglais) connu sous le nom générique ECall. Ce système est une initiative de la Commission Européenne visant à accroître le nombre de vies sauvées lors d'accidents de la route. Cette mise en oeuvre n'est aucunement limitative et n'est donnée que pour illustrer une mise en oeuvre du procédé de filtrage revendiqué.

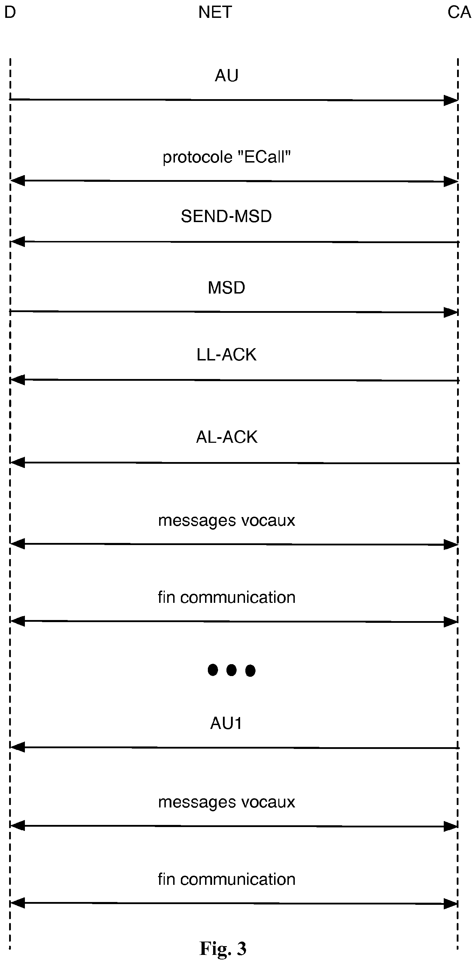

Selon ce projet, le diagramme des états de la Fig. 1 est mis en oeuvre par une succession d'échanges de messages décrite à la Fig. 3 (norme ISO, EN 16062, pages 21-22, §7.4.5, §7.4.6 & §7.5). Le dispositif D, alors dans l'état 2, commence par émettre un appel d'urgence AU à destination du central d'appel d'urgence CA. Suite au décrochage, un protocole, appelé « protocole ECall » selon la norme susmentionnée, est alors utilisé pour que le dispositif D échange des messages avec le central d'appel d'urgence CA. L'un de ces messages, appelé *SEND-MSD* en anglais, est émis par le central d'appel d'urgence CA pour demander au dispositif D de lui transmettre des informations relatives, d'une part, aux caractéristiques du véhicule et, d'autre part, à sa géolocalisation. Ce protocole de transmission utilise un circuit de voix avec une modulation spéciale permettant de transmettre des données dans la voix à travers un réseau cellulaire, 3G par exemple. Cette fonction s'appelle « *in-band modem* » en anglais.

Le dispositif D transmet alors au central d'appel d'urgence CA ces informations sous la forme d'un message appelé MSD (*Minimum Set of Data* en anglais) en utilisant cette modulation spéciale. Une fois les informations reçues par le central d'appel d'urgence CA, au moins un message d'acquittement, appelé 'LL-ACK' (acquittement de niveau 2 de la couche OSI de la norme) ou encore 'AL-ACK' (acquittement de niveau 5 de la couche OSI appelé HL-ACK selon la norme 3GPP TS 26.267), est envoyé par le central d'appel d'urgence CA et reçu par le dispositif D. Le message AL-ACK atteste que les informations émises ont été correctement reçues par le central d'appel d'urgence CA.

Le message LL-ACK est en fait un message LL (Link-Layer) contenant le code ACK représenté en binaire par 0010 selon la description faite dans TS 3GPP 26.267 release 9 section 6.1.2 *BCH Encoding.*

Les codes 0100 à 1111 sont indiqués comme non utilisés.

L'usager et l'opérateur du central d'appel d'urgence CA dialoguent alors entre eux. Une fois leur conversation terminée (événement CC), la communication est interrompue et le dispositif D bascule dans l'état 3.

Suite à l'apparition de l'événement E2 (nouvel appel entrant AU1), le dispositif bascule dans l'état 5 et il est déterminé si l'appelant de cet appel entrant est un central d'appel d'urgence. Si l'appelant est identifié comme n'étant pas un central d'appel d'urgence, alors le dispositif bascule vers l'état 3 et si, au contraire, l'appelant est identifié comme étant un central d'appel d'urgence alors le dispositif D bascule dans l'état 4 tel que expliqué en relation avec la Fig. 2.

Selon un mode de réalisation du procédé, un appelant d'un nouvel appel entrant est identifié par le dispositif D à partir d'un message particulier reçu que cet appelant a émis à destination du dispositif D.

Selon une variante de ce mode de réalisation, ce message particulier porte le numéro de l'appelant (*Caller Line Identifier* en anglais).

Cette variante est avantageuse car elle permet au dispositif D de déterminer si le nouvel appel entrant a été émis par le central d'appel d'urgence auquel le dispositif D a émis son appel d'urgence.

Avantageusement, le dispositif D mémorise au préalable, éventuellement dans une base de données, au moins un numéro d'un central d'appel d'urgence et le numéro d'un appelant est alors comparé avec chaque numéro de central d'appel d'urgence mémorisé, l'appelant étant alors considéré comme un central d'appel d'urgence lorsque son numéro est identique à l'un des numéros mémorisés.

Ceci est particulièrement avantageux lorsque le numéro du central d'appel d'urgence peut varier en fonction de la localisation du véhicule accidenté ou encore selon l'opérateur qui gère le central d'appel d'urgence à proximité du véhicule accidenté.

Le ou les numéro(s) de central d'appel d'urgence mémorisés par le dispositif D peuvent, selon une variante, être mis à jour (ajoutés, supprimés) suite à la réception d'un message qui porte un numéro de central d'appel d'urgence. Cette mise à jour est faite suite à la réception soit de certains messages qui portent un numéro de central d'appel d'urgence soit de chaque message particulier qui porte un numéro de central d'appel d'urgence.

Selon une variante de ce mode de réalisation, le numéro de l'appelant est transmis de l'appelant vers le dispositif D sous forme d'un signal modulé en voix.

Un exemple d'une telle méthode de transmission est connu sous le nom de «*in-band modem* » en anglais.

Le numéro de l'appelant est porté dans le message d'acquittement LL mentionné plus haut.

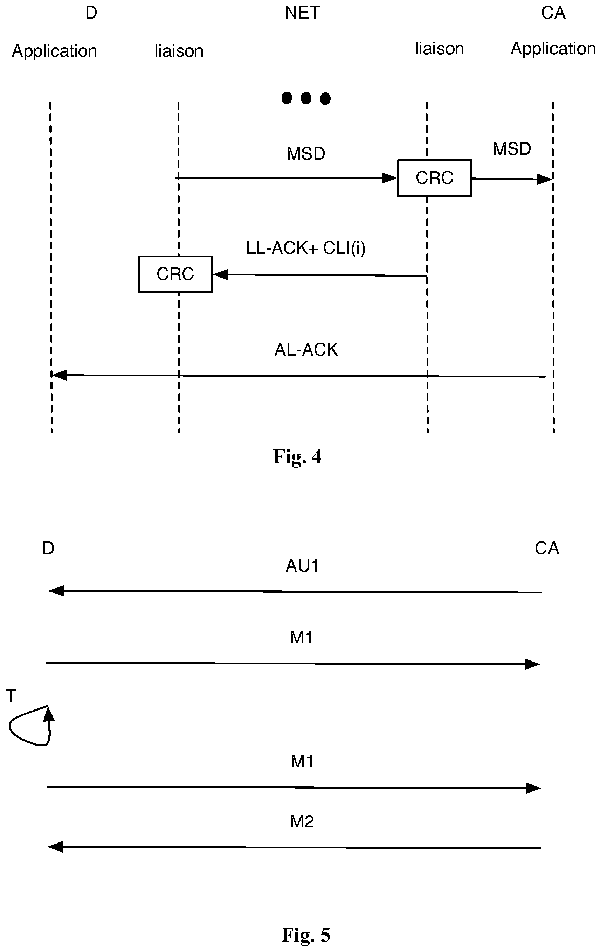

La Fig. 4 représente un exemple d'implémentation d'un mode de réalisation du procédé de filtrage dans le séquencement temporel de la Fig. 3.

Selon cette implémentation, est utilisé un message d'acquittement LL défini par la norme susmentionnée pour qu'un central d'appel d'urgence CA émette son numéro d'identifiant.

Suite à la réception du message MSD, le central d'appel d'urgence CA, au niveau de sa couche dite de liaison (modèle OSI), vérifie que la transmission a été correctement effectuée (vérification CRC). Les informations relatives aux caractéristiques du dispositif D et à sa géolocalisation sont alors remontées à la couche application pour traitement. Au niveau de la couche de liaison, le central d'appel d'urgence CA émet le message d'acquittement LL-ACK dans le cas où la vérification CRC est positive. Une fois le message LL-ACK reçu, le dispositif D et le central d'appel d'urgence CA basculent dans un mode transmission du numéro d'appel CLI. Dans ce mode particulier de fonctionnement, pour chaque chiffre CLI(i) du numéro d'appel CLI, le central d'appel d'urgence CA envoie un message LL décrit selon la norme TS 3GPP 26.267 release 9, section 6.1.4.1 *Link-layer feedback messages* et contenant, dans le champ *DL-Data* mentionné dans la norme précédente, le chiffre encodé par exemple de la façon suivante :
0 → 0100
1 → 0101
9 → 1101

Côté dispositif, il est vérifié au niveau de sa couche de liaison si la transmission d'un message LL+CLI(i) s'est correctement effectuée (vérification CRC). Le dernier message LL envoyé contient un code particulier, par exemple 1111, pour indiquer la fin de la transmission du numéro d'appel CLI.

Le central d'appel d'urgence CA et le dispositif D basculent alors du mode de transmission du numéro d'appel CLI vers un mode réception/transmission d'un message AL-ACK. Le central d'appel d'urgence CA émet alors à destination du dispositif D, le message d'acquittement AL-ACK défini selon la norme susmentionnée.

On peut noter que le même procédé de transmission du numéro d'appel CLI peut être mis en oeuvre en utilisant des messages AL-ACK au lieu des messages LL car un message AL-ACK est très similaire dans son encodage au message LL à l'exception de la trame de synchronisation qui est inversée (TS 3GPP 26.267 release 9 section 6.1.4.2 *Higher-Layer Acknowledgement Message*).

Comme on l'a vu précédemment, selon un mode de réalisation du procédé, un appelant d'un nouvel appel entrant est identifié par le dispositif D à partir d'un message particulier reçu que cet appelant a émis à destination du dispositif D.

Selon une variante de ce mode de réalisation, ce message particulier porte le nom de l'appelant. Ce message particulier est, par exemple, un message du mécanisme CNAP (*Calling Name Presentation* en anglais) décrit dans la norme 3GPP TS 24.096 Release 10. Le nom du central d'appel d'urgence CA peut être une chaîne normalisée, par exemple, « eCall PSAP ». De préférence, ce nom est stocké au sein de l'annuaire du réseau cellulaire NET avec le numéro de téléphone. Lors de l'établissement d'un appel, le réseau cellulaire NET mettant alors en oeuvre le mécanisme CNAP, recherche le nom de l'appelant à partir de son numéro de téléphone dans l'annuaire et le communique au dispositif D à travers le protocole décrit dans la norme 3GPP TS 24.096 Release 10, section 4.

Cette variante est avantageuse car elle permet au dispositif D de déterminer si le nouvel appel entrant a été émis par le central d'appel d'urgence auquel le dispositif D a émis son appel d'urgence.

Avantageusement, le dispositif D mémorise au préalable, éventuellement dans une base de données, au moins un nom d'un central d'appel d'urgence et le nom d'un appelant est alors comparé avec chaque nom de central d'appel d'urgence mémorisé, l'appelant étant alors considéré comme un central d'appel d'urgence lorsque son nom est identique à l'un des noms mémorisés. De manière équivalente, le nom de l'appelant peut être identique à un nom contenu dans une chaîne de caractères mémorisée.

Ceci est particulièrement avantageux lorsque le nom du central d'appel d'urgence peut varier en fonction de la localisation du véhicule accidenté ou encore selon l'opérateur qui gère le central d'appel d'urgence à proximité du véhicule accidenté.

De plus, la variante utilisant des noms plutôt que des numéros d'appelant est avantageuse car les noms peuvent être moins nombreux que les numéros. Le répertoire du dispositif D qui contient les identifiants de central d'appel d'urgence peut alors être de taille réduite. Un autre avantage de cette variante avec nom est que le central d'appel d'urgence n'a plus besoin de transmettre à l'avance son identifiant, ce qui rend le protocole plus robuste en cas d'erreurs de transmission dans un contexte d'appel d'urgence.

Le ou les nom(s) de central d'appel d'urgence mémorisés par le dispositif D peuvent, selon une variante, être mis à jour (ajoutés, supprimés) suite à la réception d'un message qui porte un nom de central d'appel d'urgence. Cette mise à jour est faite suite à la réception soit de certains messages qui portent un nom de central d'appel d'urgence soit de chaque message particulier qui porte un nom de central d'appel d'urgence.

Selon une variante de ce mode de réalisation, le nom de l'appelant est transmis de l'appelant vers le dispositif D sous forme d'un signal modulé en voix.

Un exemple d'une telle méthode de transmission est connu sous le nom de « *in-band modem* » en anglais.

Selon un autre mode de réalisation, un appelant d'un nouvel appel entrant est identifié par le dispositif D à partir du type particulier d'un message reçu que cet appelant a émis à destination du dispositif D, l'appelant étant alors considéré comme un central d'appel d'urgence lorsque le type du message reçu est un message d'un protocole particulier.

Ce mode de réalisation est particulièrement avantageux car il ne demande aucune modification du protocole normalisé.

Ce mode de réalisation est illustré à la Fig. 5 décrite en relation avec la Fig. 2. Le dispositif D est dans l'état 3. Une fois que le central d'appel d'urgence a émis un nouvel appel entrant AU1 à destination du dispositif D, le central d'appel d'urgence CA se met en attente de recevoir un message vocal particulier M1. Le dispositif D, alors dans l'état 3, reçoit l'appel entrant AU1 et bascule vers l'état 5. Il émet alors à destination de l'appelant le message vocal M1 qu'il a, éventuellement, mémorisé au préalable dans une de ses mémoires, et se met en attente de recevoir un autre message particulier M2. L'appelant est alors considéré comme un central d'appel d'urgence si le dispositif reçoit ledit autre message particulier M2 avant l'expiration d'une durée prédéterminée T. On peut noter que l'illustration de la Fig. 5 n'est qu'un exemple de mise en oeuvre du mode de réalisation. En effet, en reprenant les termes de cet exemple, il est possible, en variante, que le dispositif D soit en attente de recevoir le message M2 sans au préalable avoir émis le message M1.

Si à l'issue de cette durée prédéterminée T, aucun message M2 n'est reçu, un événement E4 est généré et le dispositif D bascule dans l'état 3 (évènement E4).

En variante, à l'issue de cette durée prédéterminée T, le message M1 est réémis par le dispositif D tant qu'un nombre entier prédéterminé N de retransmission n'est pas atteint. Si ce nombre entier est atteint, l'événement E4 est généré et le dispositif D bascule dans l'état 3.

Suite à la réception du message M1, l'appelant, qui est alors un central d'appel d'urgence, émet le message M2 à destination du dispositif D. A réception de ce message M2 (évènement E5), le dispositif D bascule dans l'état 4 tel que expliqué à la Fig. 2. En variante, le message M2 est émis sans réception au préalable du message M1.

Le message M2 est par exemple le message SEND-MSD.

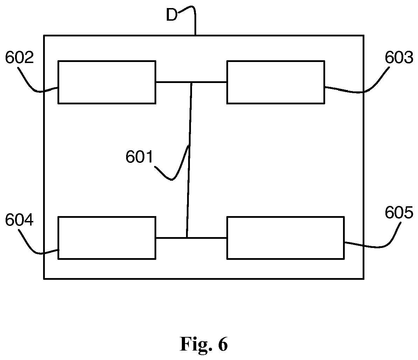

A la Fig. 6 est représentée l'architecture d'un dispositif mettant en oeuvre le procédé de filtrage revendiqué.

Le dispositif D comporte, reliées par un bus de communication 601, des ressources matérielles très limitées en termes de capacités qui sont:
- un processeur, micro-processeur ou microcontrôleur 602 ;
- une mémoire vive RAM (*Random Access Memory* en anglais ou *Mémoire à Accès Aléatoire* en français) 603 ;
- une mémoire 604 de type ROM (*Read Only Memory* en anglais ou *Mémoire à Lecture Seule* en français) ou encore flash ou réinscriptible mais rémanente (telles que dans une clé USB) ;
- des moyens d'interface 605 avec le réseau de téléphonie cellulaire NET.

Le microcontrôleur 602 est capable d'exécuter des instructions chargées dans la RAM 603 à partir de la mémoire 604. Lorsque le dispositif D est mis sous tension, le microcontrôleur 602 est capable de lire de la RAM 603 des instructions et de les exécuter. Ces instructions forment un programme d'ordinateur qui cause la mise en oeuvre, par le microcontrôleur 602, de tout ou partie des procédés décrits ci-dessus en relation avec les Figs. 1-5. Le dispositif D comporte des moyens pour identifier l'appelant de chaque nouvel appel entrant, pour établir une communication entre le dispositif et un opérateur du central d'appel d'urgence si l'appelant identifié est un central d'appel d'urgence, et pour retourner à l'état d'attente d'éventuels appels entrants à la fin de la communication.

Ces moyens sont formés par le microcontrôleur 602 qui coopère avec les mémoires 604 et RAM et les moyens 605 par exemple.

Tout ou partie des procédés décrits ci-dessus en relation avec les Figs. 1-5 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur, tel que le microcontrôleur 602, ou être implémenté sous forme matérielle par une machine ou un composant dédié, tel qu'un FPGA (*Field-Programmable Gate Array* en anglais ou *Matrice de Portes Programmable sur Champ* en français) ou un ASIC (*Application-Specific Integrated Circuit* en anglais ou *Circuit Intégré Spécifique à une Application* en français).

## Revendications

1. Procédé de filtrage d'appels entrants mis en oeuvre par un dispositif (D) embarqué dans un véhicule, ledit dispositif (D) ayant préalablement émis un appel d'urgence à destination d'un central d'appel d'urgence (CA) qui gère les appels d'urgence et ledit dispositif (D) étant dans un état (3) d'attente d'éventuels appels entrants émis par des appelants, le procédé comportant les étapes suivantes :
- identification de l'appelant de chaque nouvel appel entrant,
- si l'appelant identifié est un central d'appel d'urgence (CA) alors une communication entre le dispositif (D) et un opérateur du central d'appel d'urgence (CA) est établie, et
- le dispositif (D) retourne à l'état (3) d'attente d'éventuels appels entrants à la fin de la communication, **caractérisé en ce que**, lorsque ledit dispositif (D) reçoit chaque nouvel appel entrant, ledit dispositif (D) émet à destination de l'appelant un message vocal particulier (M1), et se met en attente de recevoir un autre message particulier (M2), l'appelant étant alors considéré comme un central d'appel d'urgence (CA) lorsque le dispositif (D) reçoit ledit autre message particulier (M2) avant l'expiration d'une durée prédéterminée (T).

2. Procédé selon la revendication 1, dans lequel, une fois que le central d'appel d'urgence a émis un nouvel appel entrant à destination du dispositif, le central d'appel d'urgence se met en attente de recevoir ledit message vocal particulier (M1),

3. Procédé selon l'une quelconque des revendications 1 et 2, dans lequel, à l'issue de cette durée prédéterminée (T), ledit dispositif réémet ledit message particulier (M1) tant qu'un nombre entier prédéterminé de retransmission n'est pas atteint.

4. Procédé selon l'une quelconque des revendication 1 à 3, dans lequel un appelant d'un nouvel appel entrant est identifié par le dispositif à partir d'un message particulier reçu que cet appelant a émis à destination du dispositif.

5. Procédé selon la revendication 4, dans lequel ce message particulier porte le numéro ou le nom de l'appelant.

6. Procédé selon la revendication 5, dans lequel le dispositif mémorise au préalable au moins un numéro d'un central d'appel d'urgence et le numéro d'un appelant est alors comparé avec chaque numéro de central d'appel d'urgence mémorisé, l'appelant étant alors considéré comme un central d'appel d'urgence lorsque son numéro est identique à l'un des numéros mémorisés.

7. Procédé selon l'une quelconque des revendications 5 et 6, dans lequel le numéro de l'appelant est transmis de l'appelant vers le dispositif sous forme d'un signal modulé en voix.

8. Dispositif (D) de filtrage d'appels entrants destiné à être embarqué dans un véhicule, ledit dispositif (D) comportant des moyens pour émettre un appel d'urgence à destination d'un central d'appel d'urgence (CA) qui gère les appels d'urgence, ledit dispositif (D) étant prévu, lorsque ledit dispositif (D) a préalablement émis un appel d'urgence, pour être dans un état (3) d'attente d'éventuels appels entrants émis par des appelants distants, ledit dispositif (D) comportant :
- des moyens pour identifier l'appelant de chaque nouvel appel entrant,
- des moyens pour établir une communication avec un opérateur du central d'appel d'urgence (CA) si l'appelant identifié est un central d'appel d'urgence (CA), et
- des moyens pour retourner à l'état (3) d'attente d'éventuels appels entrants à la fin de la communication, **caractérisé en ce que**, lorsque ledit dispositif (D) reçoit chaque nouvel appel entrant, ledit dispositif (D) met en oeuvre :
- des moyens pour émettre à destination de l'appelant un message vocal particulier (M1),
- des moyens pour se mettre en attente de recevoir un autre message particulier (M2),
- des moyens pour considérer l'appelant comme un central d'appel d'urgence (CA) lorsque le dispositif (D) reçoit ledit autre message particulier (M2) avant l'expiration d'une durée prédéterminée (T).

9. Produit programme d'ordinateur comprenant des instructions pour mettre en oeuvre le procédé selon l'une des revendications 1 à 7 lorsque ledit programme est exécuté par un processeur.

10. Moyens de stockage lisibles par ordinateur stockant un programme d'ordinateur comprenant des instructions pour mettre en oeuvre le procédé selon l'une des revendications 1 à 7, lorsque ledit programme est exécuté par un processeur.

## Patentansprüche

1. Verfahren zur Filterung von eingehenden Anrufen, das von einer Vorrichtung (D) an Bord eines Fahrzeugs eingesetzt wird, wobei die Vorrichtung (D) vorher einen Notruf an eine Notrufzentrale (CA) gesandt hat, die die Notrufe verwaltet, und wobei die Vorrichtung (D) sich in einem Wartezustand (3) auf mögliche eingehende Anrufe befindet, die von Anrufern gesandt werden, wobei das Verfahren die folgenden Schritte umfasst:
- Identifizierung des Anrufers jedes neuen eingehenden Anrufs,
- wenn der identifizierte Anrufer eine Notrufzentrale (CA) ist, wird eine Kommunikation zwischen der Vorrichtung (D) und einer Vermittlung der Notrufzentrale (CA) hergestellt, und
- die Vorrichtung (D) kehrt nach der Kommunikation in den Wartezustand (3) auf mögliche eingehende Anrufe zurück,
**dadurch gekennzeichnet, dass**, wenn die Vorrichtung (D) jeden neuen eingehenden Anruf empfängt, die Vorrichtung (D) in Richtung des Anrufers eine besondere Sprachnachricht (M1) sendet und auf den Empfang einer weiteren besonderen Nachricht (M2) wartet, wobei der Anrufer nun als eine Nutrufzentrale (CA) betrachtet wird, wenn die Vorrichtung (D) die andere besondere Nachricht (M2) vor Ablauf einer vorbestimmten Dauer (T) empfängt.

2. Verfahren nach Anspruch 1, bei dem, wenn die Notrufzentrale einen neuen eingehenden Anruf in Richtung der Vorrichtung gesandt hat, die Notrufzentrale auf den Empfang der besonderen Sprachnachricht (M1) wartet.

3. Verfahren nach einem der Ansprüche 1 und 2, bei dem nach dieser vorbestimmten Dauer (T) die Vorrichtung die besondere Nachricht (M1) nochmal sendet, solange bis eine vorbestimmte ganze Anzahl von Wiederholungen erreicht ist.

4. Verfahren nach einem der Ansprüche 1 bis 3, bei dem ein Anrufer eines neuen eingehenden Anrufs von der Vorrichtung ausgehend von einer besonderen empfangenen Nachricht identifiziert wird, die dieser Anrufer in Richtung der Vorrichtung gesandt hat.

5. Verfahren nach Anspruch 4, bei dem diese besondere Nachricht die Nummer oder den Namen des Anrufers trägt.

6. Verfahren nach Anspruch 5, bei dem die Vorrichtung vorher mindestens eine Nummer einer Notrufzentrale speichert, und die Nummer eines Anrufers nun mit jeder gespeicherten Notrufzentralennummer verglichen wird, wobei der Anrufer nun als eine Notrufzentrale betrachtet wird, wenn seine Nummer mit einer der gespeicherten Nummern identisch ist.

7. Verfahren nach einem der Ansprüche 5 und 6, bei dem die Nummer des Anrufers von dem Anrufer zu der Vorrichtung in Form eines sprachmodulierten Signals übertragen wird.

8. Vorrichtung (D) zur Filterung von eingehenden Anrufen, die dazu bestimmt ist, an Bord eines Fahrzeugs eingesetzt zu werden, wobei die Vorrichtung (D) Mittel umfasst, um einen Notruf an eine Notrufzentrale (CA) zu senden, die die Notrufe verwaltet, wobei die Vorrichtung (D) dazu vorgesehen ist, sich in einem Wartezustand (3) auf mögliche eingehende Anrufe zu befinden, die von entfernten Anrufern gesandt werden, wenn die Vorrichtung (D) vorher einen Notruf gesandt hat, wobei die Vorrichtung (D) umfasst:
- Mittel zur Identifizierung des Anrufers jedes neuen eingehenden Anrufs,
- wenn der identifizierte Anrufer eine Notrufzentrale (CA) ist, Mittel zur Herstellung einer Kommunikation mit einer Vermittlung der Notrufzentrale (CA), und
- Mittel, um in den Wartezustand (3) auf mögliche eingehende Anrufe nach der Kommunikation zurückzukehren,
**dadurch gekennzeichnet, dass**, wenn die Vorrichtung (D) jeden neuen eingehenden Anruf empfängt, die Vorrichtung (D) einsetzt:
- Mittel, um in Richtung des Anrufers eine besondere Sprachnachricht (M1) zu senden,
- Mittel, um auf den Empfang einer weiteren besonderen Nachricht (M2) zu warten,
- Mittel, um den Anrufer als eine Nutrufzentrale (CA) zu betrachten, wenn die Vorrichtung (D) die andere besondere Nachricht (M2) vor Ablauf einer vorbestimmten Dauer (T) empfängt.

9. Computerprogrammprodukt, umfassend Befehle für den Einsatz des Verfahrens nach einem der Ansprüche 1 bis 7, wenn das Programm von einem Prozessor ausgeführt wird.

10. Von einem Computer lesbare Speichermittel, die ein Computerprogramm speichern, umfassend Befehle für den Einsatz des Verfahrens nach einem der Ansprüche 1 bis 7, wenn das Programm von einem Prozessor ausgeführt wird.

## Claims

1. Method for filtering incoming calls implemented by a device (D) installed on board a vehicle, the said device (D) having previously made an emergency call to an emergency call centre (CA) which manages emergency calls and the said device (D) being in a standby mode (3) waiting for possible incoming calls made by callers, the process comprising the following steps:
- identification of the caller of each new incoming call,
- if the identified caller is an emergency call centre (CA), communication between the device (D) and an operator of the emergency call centre (CA) is established, and
- the device (D) returns to standby mode (3) waiting for possible incoming calls at the end of the communication,
**characterized in that** when the said device (D) receives each new incoming call, the said device (D) transmits a particular voice message (M1) to the caller, and stands by waiting to receive another particular message (M2), the caller then being considered to be an emergency call centre (CA) when the device (D) receives the said other particular message (M2) before the expiry of a predetermined period (T).

2. Method according to Claim 1, wherein once the emergency call centre has made a new incoming call to the device, the emergency call centre stands by waiting to receive the said particular voice message (M1).

3. Method according to either one of Claims 1 and 2, wherein at the end of this predetermined period (T) the said device re-transmits the said particular message (M1) as long as a predetermined whole retransmission number is not reached.

4. Method according to any one of Claims 1 to 3, wherein a caller of a new incoming call is identified by the device on the basis of a received particular message that this caller has transmitted to the device.

5. Method according to Claim 4, wherein this particular message contains the number or the name of the caller.

6. Method according to Claim 5, wherein the device previously memorises at least one number of an emergency call centre and the number of a caller is then compared to each memorised emergency call centre number, the caller then being considered to be an emergency call centre when the number thereof is identical to one of the memorised numbers.

7. Method according to either one of Claims 5 and 6, wherein the caller number is transmitted from the caller to the device in the form of a modulated voice signal.

8. Device (D) for filtering incoming calls intended to be installed on board a vehicle, the said device (D) comprising means for making an emergency call to an emergency call centre (CA) which manages emergency calls, the said device (D) being designed, when the said device (D) has previously made an emergency call, to be in a standby mode (3) waiting for possible incoming calls made by remote callers, the said device (D) comprising:
- means for identifying the caller of each new incoming call,
- means for establishing communication with an operator of the emergency call centre (CA) if the identified caller is an emergency call centre (CA), and
- means for returning to standby mode (3) waiting for possible incoming calls at the end of the communication,
**characterized in that** when the said device (D) receives each new incoming call the said device (D) implements:
- means for transmitting a particular voice message (M1) to the caller,
- means for standing by waiting to receive another particular message (M2),
- means for considering the caller to be an emergency call centre (CA) when the device (D) receives the said other particular message (M2) before the expiry of a predetermined period (T).

9. Computer program product comprising instructions for implementing the method according to one of Claims 1 to 7 when the said program is executed by a processor.

10. Storage means that can be read by a computer storing a computer program comprising instructions for implementing the method according to one of Claims 1 to 7 when the said program is executed by a processor.
